# EUROPEAN PATENT APPLICATION

(11) **EP 4 458 127 A1**
(43) Date of publication of application: **06.11.2024**
(21) Application number: 24172961.5
(22) Date of filing: 29.04.2024
(51) Int. Cl.: A01D 34/00, A01D 75/18, A01D 34/86

(54) **LAWN MOWER ROBOT AND CORRESPONDING METHOD**

(30) Priority: 03.05.2023 IT 202300008700
(71) Applicant: Bernini, Fabrizio, 52021 Bucine - Arezzo (IT)
(72) Inventor: Bernini, Fabrizio, 52021 Bucine - Arezzo (IT)
(74) Representative: Milli, Simone

(57) **Abstract**

Described is a lawn mower robot comprising:
- a frame (2),
- movement means (3), associated with said frame (2), configured for moving the robot (1) along an advancement direction (D), the movement means (3) comprise a plurality of wheels (31), including at least a first drive wheel (32A) and a second drive wheel (32B), and a traction motor (MA, MB) for each drive wheel (32A, 32B) configured for rotating the respective drive wheel (32A, 32B),
- grass cutting means (4) for performing an operation for cutting grass,
- a control unit (U) configured to control at least the movement means (3) and the cutting means (4),

the lawn mower robot (1) being characterised in that it comprises at least one load sensor (5) positioned on the frame (2), configured for detecting a deformation of at least a portion of the frame (2) and/or a contact of at least a portion of the frame (2) with an external element (6) and connected to the control unit (U) to send to the control unit (U) an operating signal (S),
and wherein the control unit (U) is configured for:
- determining an abnormal operating condition of the robot (1), as a result of an operating signal (S) received from the load sensor (5) representing a deformation of at least one portion of the frame (2) and/or a contact of at least one portion of the frame (2) with an external element (6);
- controlling the movement means (3) and/or the cutting means (4) as a function of said determined abnormal operating condition.

## Description

This invention relates to the technical sector of automatic gardening devices, in particular lawn mower devices.

The lawn mower devices are used to keep lawns, gardens and grassy areas in general in optimum conditions, that is to say, for keeping the grass below a certain height in a substantially homogeneous manner over the entire cutting area.

Lawn mower robots of known type generally comprise a load-bearing frame, often having an outer body, to which are associated cutting means for the maintenance of the lawn and robot movement means for moving the robot inside a working area.

The lawn mower robots operate on areas which may have obstacles and/or irregularities of various types, for example, muddy zones, raised areas/dips in the ground, trees, bushes, rocks, flower beds, stones, swimming pools, steps or generic furnishing elements for gardens.

The presence of these obstacles and irregularities may influence the correct operation of the robot and condition the quality of the maintenance of the grass performed by the robot.

Moreover, these impediments may damage the cutting means, the frame or other components of the robot in the event of impact during operation of the robot.

Another aspect to be taken into consideration is that of safety: there could be persons or animals in the working area during normal operation of the robot and the cutting means can damage objects or injure persons and/or animals. Moreover, the lawn mower robot could be lifted and the cutting means may accidentally be in contact with persons or animals or objects which can be harmed or damaged.

Patent document WO2021096722A1 shows a lawn mower configured to pass automatically from a first operating mode, wherein the blades cut the grass at a first distance from the side wall of the lawn mower, to a second operating mode, wherein the blades cut the grass at a second distance from the side wall of the lawn mower, greater than the first, when an electronic unit associated with the lawn mower determines that an area in which the lawn mower operates is free of unknown objects.

In this context, the technical purpose which forms the basis of the invention is to provide a lawn mower robot, and a method for autonomous control of the lawn mower robot, which helps overcome one or more of the above-mentioned drawbacks of the prior art.

In particular, the aim of the invention is to provide a flexible lawn mower robot which is able to move in an autonomous and safe manner inside the working area.

A further aim of the invention is to provide a lawn mower robot which is able to detect, in use, events relating to obstacles and/or irregularities in the cutting area and adapt to them autonomously in a particularly effective manner.

Yet another aim is to provide a method for autonomously controlling a lawn mower robot which allows the robot to autonomously adapt to obstacles or unforeseen obstacles during its operation.

The features of the invention are clearly described in the claims below and its advantages are more apparent from the detailed description which follows, with reference to the accompanying drawings which illustrate a preferred, non-limiting example embodiment of the invention and in which:

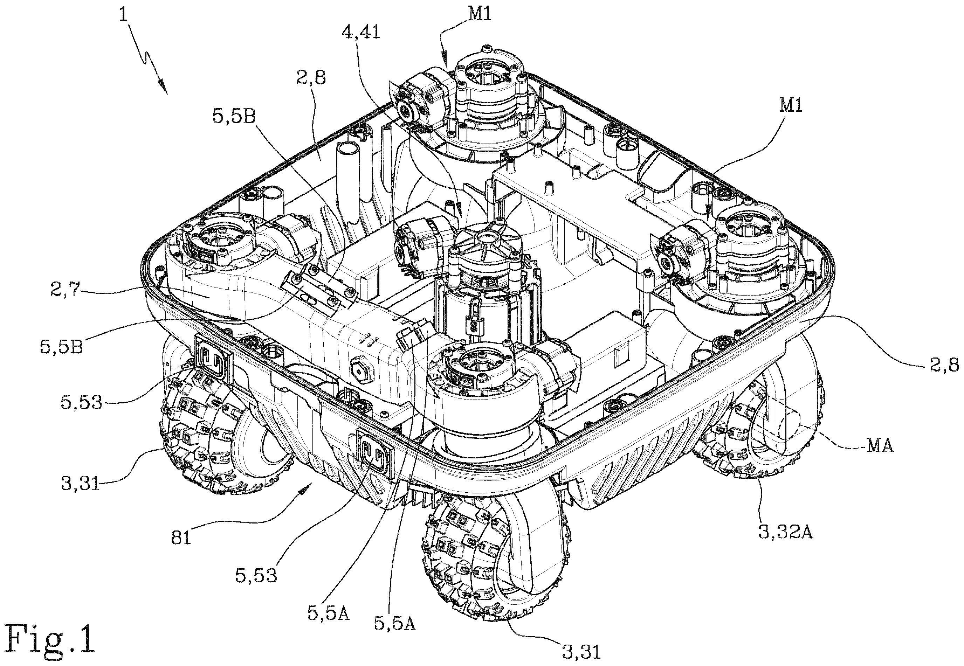

- Figure 1 is a schematic perspective view of an embodiment of the lawn mower robot according to the invention, with some portions cut away to better illustrate others;

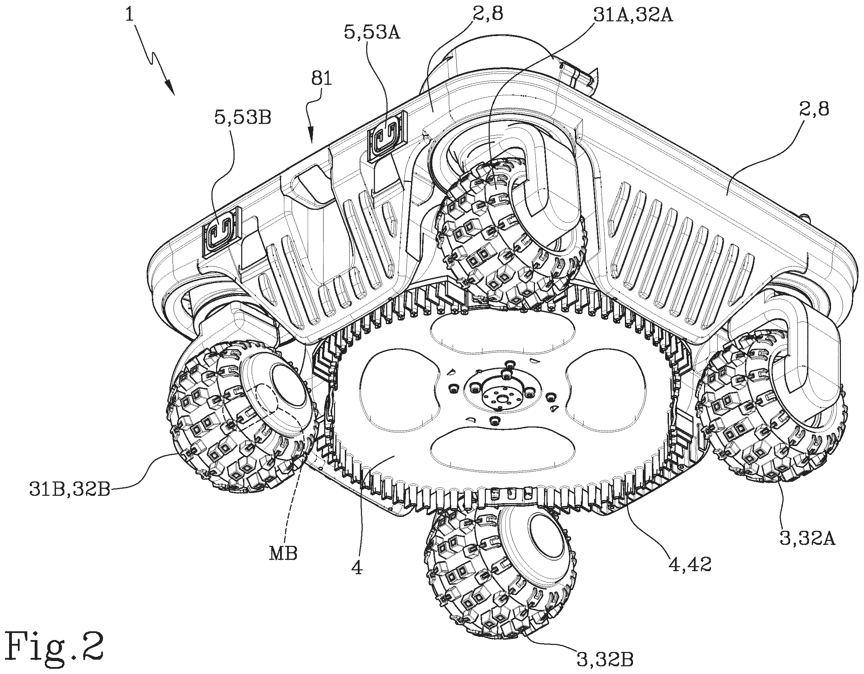

- Figure 2 is a schematic perspective view from below of the lawn mower robot of Figure 1;

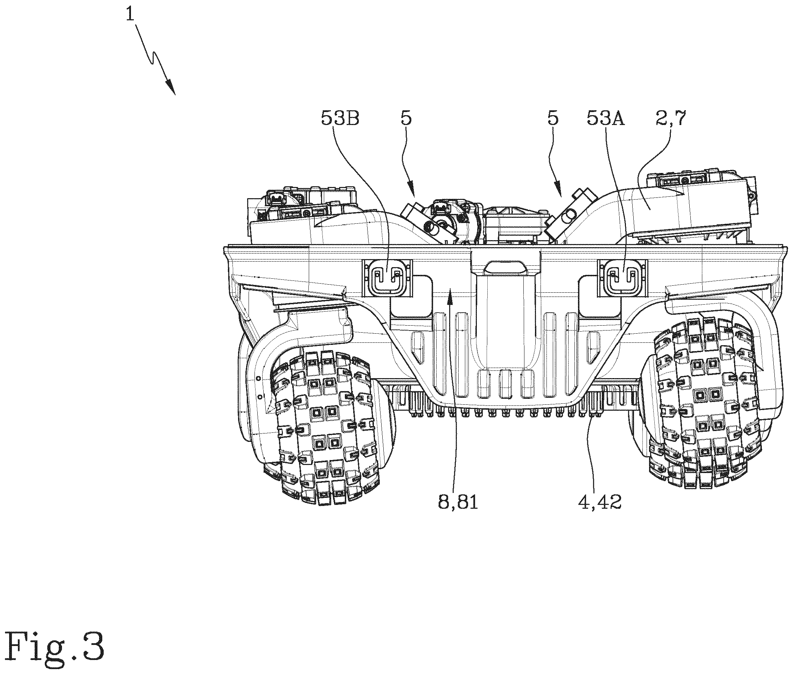

- Figure 3 is a schematic front view of the lawn mower robot of Figure 1;

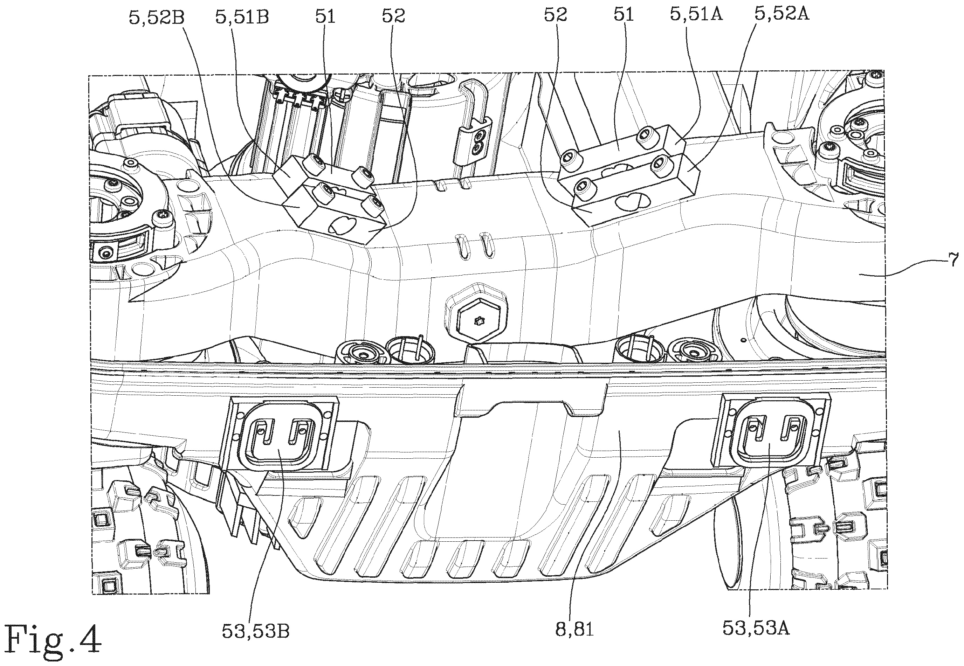

- Figure 4 schematically illustrates a detail of the lawn mower robot of Figure 1;

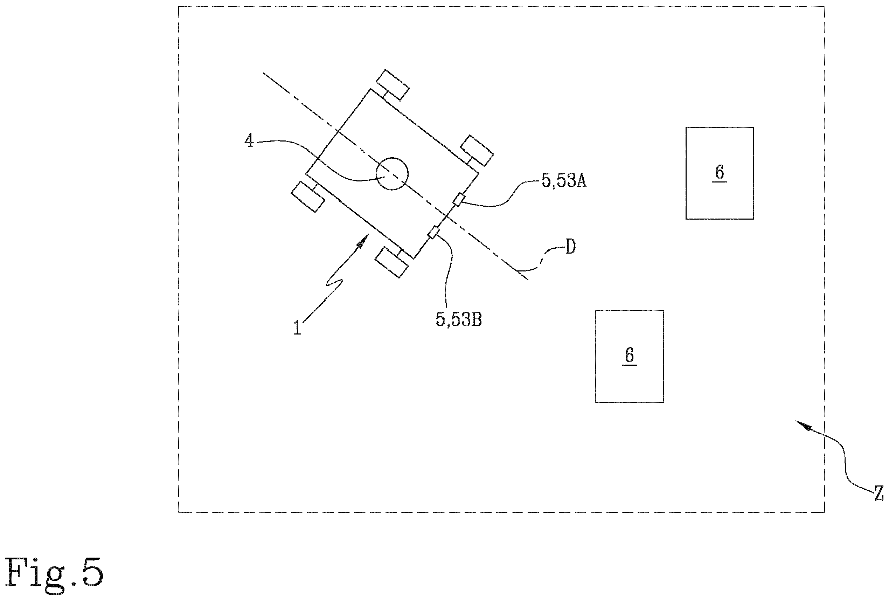

Figure 5 schematically illustrates an embodiment of the lawn mower robot of Figure 1;

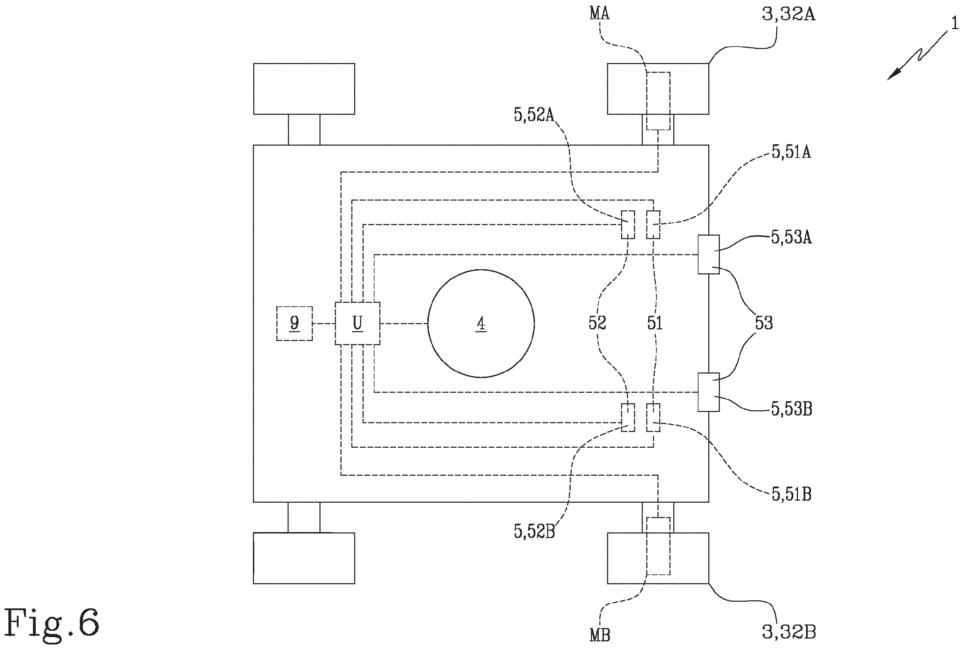

- Figure 6 schematically illustrates the control logic of the lawn mower robot of Figure 1;
- Figures 7A and 7B illustrate, respectively, a schematic representation of a first operating condition of the lawn mower robot of Figure 1 and a graph of a corresponding operating signal;
- Figures 8A and 8B illustrate, respectively, a schematic representation of a second operating condition of the lawn mower robot of Figure 1 and a graph of a corresponding operating signal;
- Figures 9A and 9B illustrate, respectively, a schematic representation of a third operating condition of the lawn mower robot of Figure 1 and a graph of a corresponding operating signal;
- Figures 10A and 10B illustrate, respectively, a schematic representation of a fourth operating condition of the lawn mower robot of Figure 1 and a graph of a corresponding operating signal.

It should be noted that the drawings are schematic representations and do not therefore represent the actual dimensions.

With reference to the accompanying drawings, the numeral 1 denotes a lawn mower robot.

In this description, for brevity, reference will be made to the lawn mower robot 1 simply as the robot 1.

According to the invention, the robot 1 comprises a frame 2 for supporting the components of the robot 1.

According to the invention, the robot 1 comprises movement means 3, associated with the frame 2.

The movement means 3 are configured for moving the robot 1 along an advancement direction X.

The movement means 3 comprise a plurality of wheels 31, including at least a first drive wheel 32A and a second drive wheel 32B and a traction motor (MA, MB) for each drive wheel (32A, 32B).

Each traction motor (MA, MB) is configured for rotating the respective drive wheel (32A, 32B).

Preferably, the rotation may be in both directions and the robot 1 can therefore be moved in both directions of the advancement direction D.

In other words, the robot 1 comprises separate traction motors for different drive wheels.

Preferably, the traction motors (MA, MB) are positioned inside the respective drive wheel (32A, 32B).

According to an embodiment, at least one pair of wheels 31 is a pair of steering wheels 31.

Preferably, the robot 1 comprises one or more orientation actuators M1. Each orientation actuator M1 is configured for moving a respective steering wheel 31 about a substantially vertical axis of rotation.

In particular, moving the steering wheels 31 in this way makes it possible to change the advancement direction D of the robot 1.

It should be noted that the wheels of the pair of steering wheels 31 may coincide with the drive wheels (32A, 32B).

According to an embodiment, the robot 1 comprises four wheels, which may all be drive wheels, each powered by a respective and separate traction motor, and all steering wheels.

According to the invention, the robot 1 comprises grass cutting means 4 to perform an operation for cutting grass inside a cutting zone Z.

The cutting means 4 are coupled to the frame 2.

Preferably, the grass may belong to a cutting zone Z corresponding, for example, to a garden, a park or in general to a lawn.

The grass cutting means 4 face towards the grass and comprise grass cutting elements 42, for example, one or more blades.

According to an aspect of the invention, the cutting means 4 comprise a cutting motor 41, configured for moving said grass cutting elements.

The robot 1 comprises a control unit U configured to control at least the movement means 3 and the cutting means 4.

In particular, the control unit U is configured to command and control the traction motors (MA, MB) and/or the actuators M1 for orientation of the steering wheels 31 and/or the cutting motor 41 for moving the cutting elements.

It should be noted that the control of the rotation of the drive wheels (32A, 32B) by the respective drive motors (MA, MB) may allow the advancement direction D of the robot 1 to be modified.

In fact, the control unit U can, for example, control the traction motors (MA, MB) in such a way that the respective drive wheels (32A, 32B) rotate at different speeds or in such a way that the respective drive wheels (32A, 32B) rotate in opposite directions; the rotation at different speeds or in opposite directions of the drive wheels (32A, 32B) determines the change of the advancement direction D of the robot 1.

This mode of controlling the traction motors constitutes an alternative to the wheels steering about a vertical axis; in essence, according to this embodiment it is possible to change the rotation even with wheels which are substantially fixed, that is to say, locked relative to the vertical axis.

By way of example, and therefore non-limiting, the power supply of the robot 1, both with regard to the movement means 3 and the cutting means 4, may be performed by electric motors, powered by a battery which may be rechargeable.

Preferably, the battery may also power other electrical/electronic devices provided on the lawn mower robot 1.

According to the invention, the robot 1 comprises at least one load sensor 5 positioned on the frame 2.

The load sensor 5 is configured to detect a deformation of at least a portion of the frame 2 and/or a contact, in particular a direct contact, of at least a portion of the frame 2 with an external element 6.

Preferably, the load sensor 5 is a load cell.

According to an aspect, the load sensor 5 comprises one or more extensometers (and, if necessary, resistors of fixed value) and allows a force applied to the sensor to be detected and measured by means of the variation of an electrical signal due to the deformation produced by the force applied on the extensometers.

According to an embodiment, the extensometers and the resistors are connected to each other by a circuit configured like a Wheatstone bridge. Preferably, the load sensor 5 has a hole in its structure to favour the deformation.

The load sensor 5 is connected to the control unit U for sending to the control unit U an operating signal S.

The operating signal S varies in intensity, and waveform, as a function of the deformation produced on the load sensor 5 by the force applied to the load sensor 5.

In other words, the load sensor 5 is configured for detecting a deformation of at least one portion of the frame 2 and/or the contact of at least one portion of the frame 2 with an external element 6 and sending an operating signal S to the control unit U: the operating signal S varies as a function of the deformation and/or the contact detected.

The load sensor 5 is configured to have an output signal which may be digital or analogue.

Preferably, the output signal is digital. Advantageously, a digital signal is more reliable than an analogue signal.

The cutting zone Z in which the robot 1 operates may have a plurality of external elements 6.

These external elements 6 are identifiable as obstacles and may be, for example, trees, bushes, rocks, flower beds, stones, swimming pools, steps or generic furnishing elements for gardens.

According to the invention, the control unit U is configured for determining an abnormal operating condition of the robot 1, as a result of an operating signal S received from the load sensor 5 representing a deformation of at least one portion of the frame 2 and/or of the contact of at least one portion of the frame 2 with an external element 6.

The expression "abnormal operating condition" of the robot 1 means an operating condition of the robot wherein the optimum standard operation of the robot 1 is, even only partly, compromised and in particular a condition wherein the robot 1 is not able to perform the functions of movement and cutting of the grass as desired.

According to an aspect of the invention, the abnormal operating condition of the robot 1 corresponds, for example, to one or more between:
- striking the robot 1, or a portion of the frame 2 of the robot 1, against an external element 6;
- striking one or more wheels (31, 32A, 32B) against an external element 6;
- lifting one or more wheels (31, 32A, 32B) relative to the supporting surface of the others, that is, relative to the ground having the grass;
- lifting all the wheels (31, 32A, 32B) relative to the ground having the grass, that is, lifting the entire robot 1 relative to the ground;
- slipping of one or more drive wheels (32A, 32B).

It should be noted that the above-mentioned list is non-limiting and an abnormal condition of the robot 1 comprises any operating condition which is not part of the normal operation of the robot 1.

According to an aspect, the control unit U is configured to determine in a deterministic manner the abnormal operating condition of the robot 1 on the basis of the operating signal S.

In particular, the control unit U is configured to determine the abnormal operating condition of the robot 1 on the basis of a shape of the operating signal S. In other words, the operating signal S has an recognisable shape, on the basis of which the control unit U determines the abnormal operating condition.

It should be noted that each load sensor 5 may be configured to send an operating signal S having a waveform which is entirely arbitrary, on the basis of which the control unit U is configured to determine the abnormal operating condition of the robot 1.

The control unit U is configured for controlling the movement means 3 and/or the cutting means 4 as a function of said determined abnormal operating condition.

In more detail, the load sensor 5 is configured for detecting a deformation of a portion of the frame 2 and/or the contact of a portion of the frame 2 with an external element 6; the load sensor 5, on the basis of the detection, is configured for sending to the control unit U an operating signal S representing the deformation of a portion of the frame 2 and/or of the contact of a portion of the frame 2 with an external element 6; the control unit U, on the basis of the operating signal S received, is configured for determining an abnormal operating condition of the robot 1 and for controlling the movement means 3 and/or the cutting means 4 as a function of the abnormal operating condition determined.

According to an aspect of the invention, the control unit U is configured to determine an abnormal operating condition of lifting one or more wheels (31, 32A, 32B) as a result of an operating signal S received having a step wave shape.

In more detail, in use, the load sensor 5 detects the deformation of a portion of the frame 2 due to the lifting of one or more wheels (31, 32A, 32B) of the robot 1 and sends to the control unit U an operating signal S which has a step wave shape. The control unit U receives the operating signal S and determines the abnormal operating condition of lifting one or more wheels (31, 32A, 32B) on the basis of the step shape of the operating signal S.

According to an aspect of the invention, the control unit U is configured for blocking a movement of the cutting means 4 as a result of the determined abnormal operating condition corresponding to the lifting of one or more wheels (31, 32A, 32B).

In short, if the control unit U determines an abnormal operating condition of lifting one or more wheels (31, 32A, 32B), the control unit U is configured to stop the cutting elements of the robot 1.

Advantageously, blocking a movement of the cutting means 4 as a result of the abnormal operating condition determined corresponding to the lifting of one or more wheels (31, 32A, 32B) allows the robot 1, autonomously, not to cause accidental damage or injury to persons, animals and/or objects and also allows the cutting elements not to be accidentally damaged.

Consider, for example, the case in which the robot 1 is raised manually relative to the ground: if the cutting elements were not stopped, they could injure the person who has raised the robot 1 or the cutting elements themselves could strike an object close to the person, injuring the person or damaging the object struck.

According to an aspect of the invention, the control unit U is configured to determine an abnormal operating condition of impact of the robot 1 and/or of one or more wheels (31, 32A, 32B) with an external element 6 as a result of an operating signal S received having a pulse wave shape.

In more detail, in use, the load sensor 5 detects the deformation of a portion of the frame 2 due to the impact of the robot 1 and/or of one or more wheels (31, 32A, 32B) with an external element 6 and sends to the control unit U an operating signal S which has a pulse wave shape. The control unit U receives the operating signal S and determines the abnormal operating condition of impact of the robot 1 and/or of one or more wheels (31, 32A, 32B) with an external element 6 on the basis of the pulse shape of the operating signal S.

According to an aspect of the invention, the control unit U is configured for modifying the advancement direction D of the robot 1 as a result of the determined abnormal operating condition corresponding to the impact of the robot 1 and/or of one or more wheels (31, 32A, 32B) with an external element 6.

In essence, having determined an abnormal operating condition of impact of the robot 1 and/or of one or more wheels (31, 32A, 32B) with an external element 6, the control unit U is configured to perform a direction change operation on the robot 1.

The modification of the advancement direction D of the robot 1 allows, for example, circumventing obstacles.

According to the embodiment of the robot 1 comprising at least one pair of steering wheels 31, the control unit U is configured for actuating the actuators M1 for orientation of the steering wheels 31 for modifying the advancement direction D of the robot 1 as a result of the determined abnormal operating condition corresponding to the impact of the robot 1 and/or one or more wheels (31, 32A, 32B) with an external element 6. According to an aspect of the invention, the control unit U is configured for controlling the power supply of the drive wheels (32A, 32B) from the respective traction motor (MA, MB) as a result of the determined abnormal operating condition corresponding to the impact of the robot 1 and/or of one or more wheels (31, 32A, 32B) with an external element 6.

The control of the power supply of the drive wheels (32A, 32B) from the respective traction motor (MA, MB) makes it possible to modify the direction of travel of the robot 1 along the advancement direction D and/or stop the robot 1, blocking the movement along the advancement direction D, and/or modify the advancement direction D.

Advantageously, modifying the advancement direction D of the robot 1 and/or controlling the power supply of the drive wheels (32A, 32B) from the respective traction motor (MA, MB) as a result of the determined abnormal operating condition corresponding to the impact of the robot 1 and/or of one or more wheels (31, 32A, 32B) with an external element 6 allows the robot 1, autonomously, to avoid further impacts with the external element 6 and/or to avoid it and continue the standard operation for maintenance of the grass.

According to an aspect of the invention, the control unit U is configured to determine an abnormal operating condition of slipping one or more drive wheels (32A, 32B) as a result of an operating signal S received having a wave shape having trains of pulses in sequence, that is to say, a plurality of micro-peaks in sequence.

More in detail, in use, the load sensor 5 detects the deformation of a portion of the frame 2 due to the slipping of one or more drive wheels (32A, 32B) and sends to the control unit U an operating signal S which has a wave shape having trains of pulses in sequence. The control unit U receives the operating signal S and determines the abnormal operating condition of slipping one or more drive wheels (32A, 32B) on the basis of the wave form, having trains of pulses in sequence, of the operating signal S.

According to an aspect of the invention, the control unit U is configured to control and/or deactivate the power supply of the drive wheels (32A, 32B) from the respective traction motor (MA, MB) as a result of the determined abnormal operating condition corresponding to the slipping of one or more drive wheels (32A, 32B).

In short, having determined an abnormal operating condition of slipping of one or more drive wheels (32A, 32B), the control unit U is configured to act on the motors of the robot 1 to impart different powers or change direction of the robot 1.

The control of the power supply of the drive wheels (32A, 32B) from the respective traction motor (MA, MB) makes it possible to modify the direction of travel of the robot 1 along the advancement direction D and/or stop the robot 1 stopping the movement along the advancement direction D.

Advantageously, controlling and/or deactivating the power supply of the drive wheels (32A, 32B) from the respective traction motor (MA, MB) as a result of the determined abnormal operating condition corresponding to the slipping of one or more drive wheels (32A, 32B) allows the robot 1, autonomously, to optimise the traction of the robot 1 on the ground and, consequently, the movement of the robot 1. Moreover, this allows the robot 1, if necessary, to stop and not consume energy whilst waiting for maintenance and/or manual intervention.

According to the invention, the frame 2 comprises an axle 7 connected to a pair of wheels 31 and/or drive wheels (32A, 32B) and a rigid body 8 supporting the axle 7.

The wheels 31 may be steering wheels 31.

At least one load sensor 5 is positioned on the axle 7 for detecting a deformation of said axle 7.

According to an aspect of the invention, at least one load sensor 5 is positioned in a front portion 81 of the rigid body 8.

Preferably, the at least one load sensor 5 positioned in a front portion 81 of the rigid body 8 is a pressure load sensor, that is to say, a load sensor which comprises one or more extensometers (and, if necessary, resistors) which deform due to a pressure.

Advantageously, a load sensor 5 positioned in the front portion 81 of the rigid body 8 makes it possible to detect precisely a deformation of the frame 2 due to an impact with an external element 6.

More in detail, considering a movement of the robot 1 along the advancement direction D, any deformation of the frame 2 due to a front impact of the robot 1 with an external element 6 is detected in a precise fashion by the at least one load sensor 5 positioned in the front portion 81 of the rigid body 8.

Preferably, the robot 1 comprises at least one load sensor 5 on the axle 7 and at least one load sensor 5 in the front portion 81 of the rigid body 8. Advantageously, having at least one load sensor 5 both on the axle 7 and in the front portion 81 of the rigid body 8 increases the precision of the detection of deformations of the frame 2.

According to an embodiment, the robot 1 comprises at least one pair of load sensors 5 inside the frame 2 and positioned on the axle 7.

According to an aspect of the invention, at least one pair of wheels 31 comprises a first wheel 31A and a second wheel 31B.

According to an embodiment, the first wheel 31A is a first steering wheel 31A and the second wheel 31B is a second steering wheel 31B.

It should be noted that the first wheel 31A may coincide with the first drive wheel 32A and the second wheel 31B may coincide with the second drive wheel 32B.

According to an aspect of the invention, the pair of load sensors 5 inside the frame 2 comprises a first load sensor 5A and a second load sensor 5B. The first load sensor 5A is located close to the first wheel 31A and the second load sensor 5B is located close to the second wheel 31B. Advantageously, this arrangement of the load sensors (5A, 5B) makes it possible to optimise the operation of the sensors, since they are positioned in the zones affected by the event to be observed: thanks to this positioning, the deformation and, consequently, the operating signal S are amplified relative to a different arrangement of the sensors (5A, 5B). According to an embodiment, the robot 1 comprises a first pair 51 and a second pair 52 of load sensors 5 inside the frame 2.

The first pair 51 of load sensors 5 inside the frame 2 comprises a first load sensor (5, 51A) and a second load sensor (5, 51B).

The second pair 52 of load sensors 5 inside the frame 2 comprises a first load sensor (5, 52A) and a second load sensor (5, 52B).

The first load sensors (51A, 52A) of the first and second pairs (51, 52) of load sensors 5 inside the frame 2 are positioned in proximity of the first wheel 31A and the second load sensors (51B, 52B) of the first and second pairs (51, 52) of load sensors (5) inside the frame 2 being positioned in proximity of the second wheel 31B.

According to an embodiment, the planes on which lie, respectively, the first load sensors (51A, 52A) and the second load sensors (51B, 52B) form between them an angle of between 45° and 135°, more preferably between 60° and 120°, even more preferably between 80° and 100°. According to a preferred embodiment, the angle is equal to 90°. Advantageously, a greater quantity of load sensors 5 makes it possible to send a greater number of operating signals S to the control unit U. Advantageously, a greater number of operating signals S received from the control unit U makes it possible to determine with greater precision an abnormal operating condition of the robot 1.

According to an embodiment, the robot 1 comprises a pair 53 of front load sensors 5 positioned in the front portion 81 of the rigid body 8. Advantageously, this arrangement of the load sensors 5 makes it possible to optimise the detection of a contact of the frame 2 with an external element 6, that is to say, an impact of the robot 1.

Preferably, the pair 53 of front load sensors 5 comprises a first load sensor (5, 53A) and a second load sensor (5, 53B) positioned in the proximity, respectively, of the first wheel 31A and of the second wheel 31B. According to a preferred embodiment, the robot 1 comprises the first pair 51 and the second pair 52 of load sensors 5 inside the frame 2 and the pair 53 of front load sensors 5.

Advantageously, having a plurality of load sensors 5 positioned in different portions of the robot 1 makes it possible to detect a greater number of deformations of the frame 2.

Advantageously, a plurality of load sensors 5 positioned in different portions of the robot 1 makes it possible to precisely detect deformations of the frame 2 due to a plurality of different events and involving different portions of the robot 1.

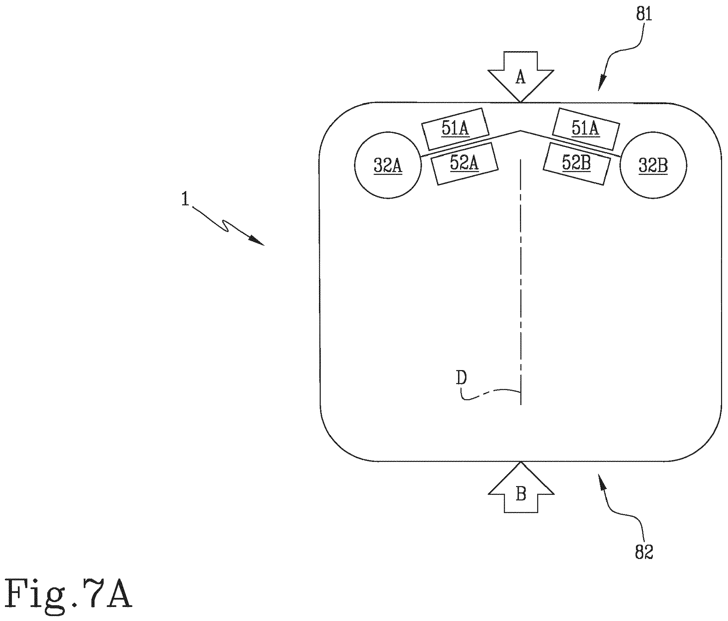

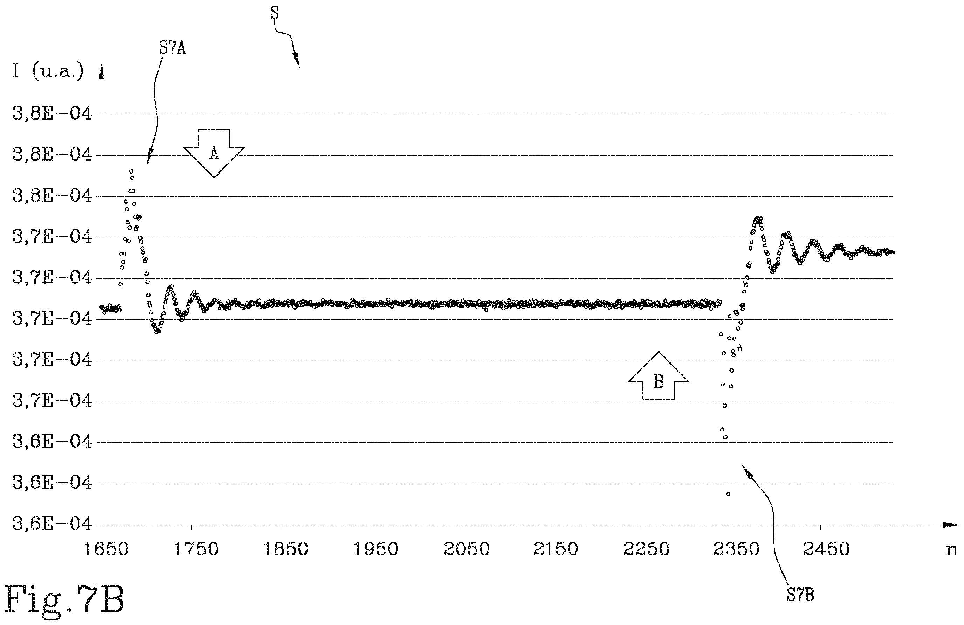

Figures 7A and 7B show the pulse wave form of the operating signal S sent by the load sensor 52A upon the detection of a deformation of the frame 2 due to an impact of the robot 1 with an external element 6. The numeral A in Figure 7A denotes an impact of the front portion 81 of the body 8 with an external element 6 and the numeral B denotes an impact of a rear portion 82 of the body 8 with an external element 6.

In particular, in Figure 7B, the regions S7A and S7B correspond to the variations in intensity of the operating signal S sent to the control unit U: after receiving an operating signal S with this pulse shape, the control unit U is configured to determine the abnormal operating condition of impact of the robot 1 with an external element 6 and to modify the advancement direction D of the robot 1 and/or control the power supply of the drive wheels (32A, 32B) from the respective traction motor (MA, MB).

It should be noted in Figure 7B that the deformations to the frame 2 due to the impacts A and B, respectively, of the front portion 81 and the rear portion 82 of the body 8 with an external element 6, involve, respectively, a peak and a dip in the operating signal S of with a similar wave shape.

It should also be noted that, following the pulse indicated in the regions S7A and S7B, the operating signal S returns elastically to a constant intensity.

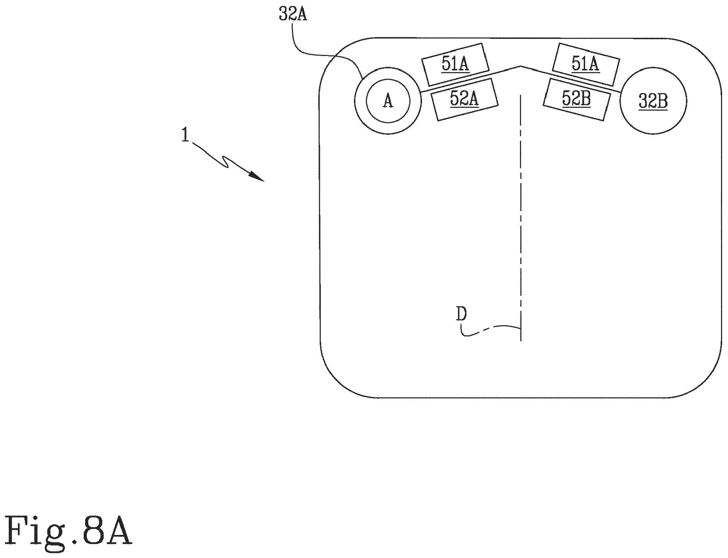

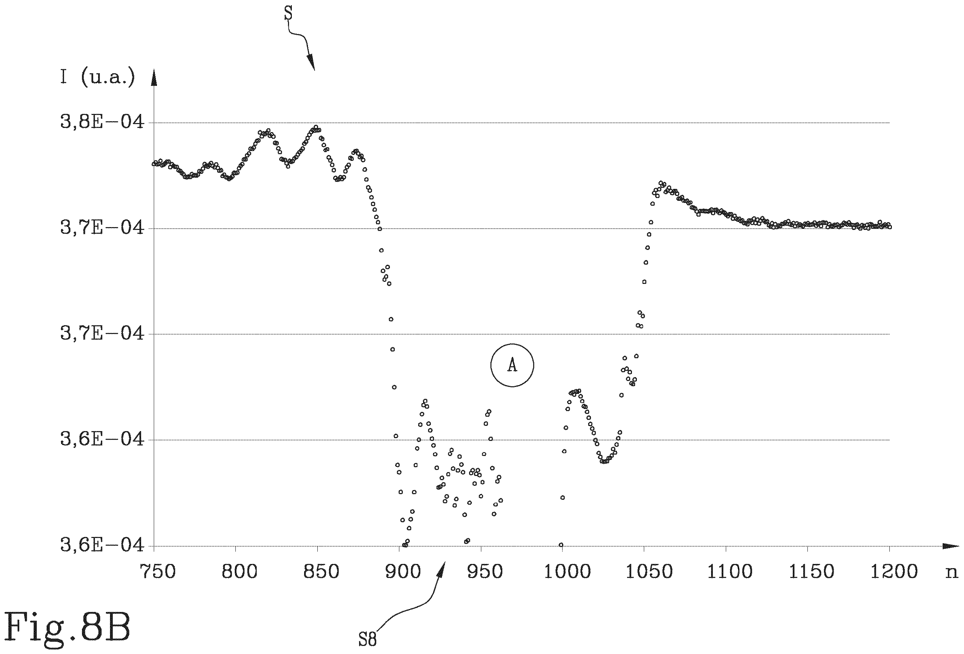

Figures 8A and 8B show the waveform of the operating signal S sent by the load sensor 52A upon the detection of a deformation of the frame 2 due to an impact of the wheel 32A with an external element 6. In Figure 8A an impact of the wheel 32A with an external element 6 is labelled A.

In particular, in Figure 8B, the region S8 corresponds to the variation of the intensity of the operating signal S sent to the control unit U: this variation can be approximated to a form of pulse wave. After receiving an operating signal S with this pulse shape, the control unit U is configured to determine the abnormal operating condition of impact of a wheel with an external element 6 and to modify the advancement direction D of the robot 1 and/or control the supply of the drive wheels (32A, 32B) from the respective traction motor (MA, MB).

It should be noted in Figure 8B that, following the pulse indicated in the region S8, the operating signal S returns elastically to a constant intensity. It should also be noted that the amplitude of the variation of the operating signal S is greater than that illustrated in Figure 7B: this is due to the arrangement of the load sensor 52A, which is close to the wheel 32A, resulting in a more amplified signal of the detection of an impact of the wheel 32A with respect to the detection of a generic impact of the frame 2 with an external element 6.

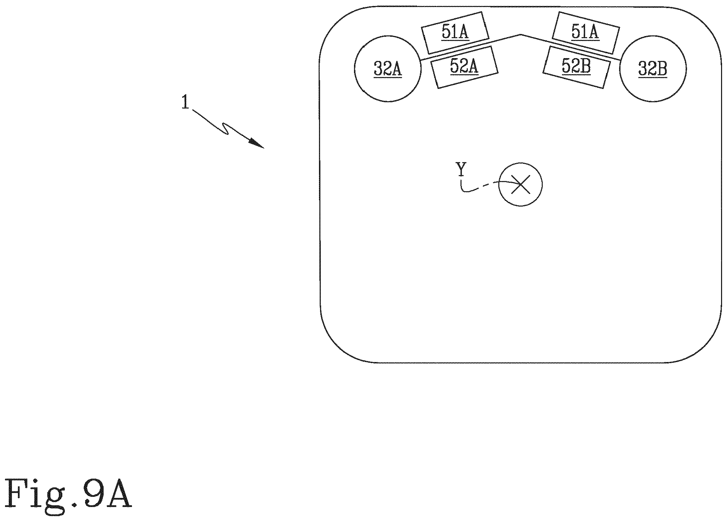

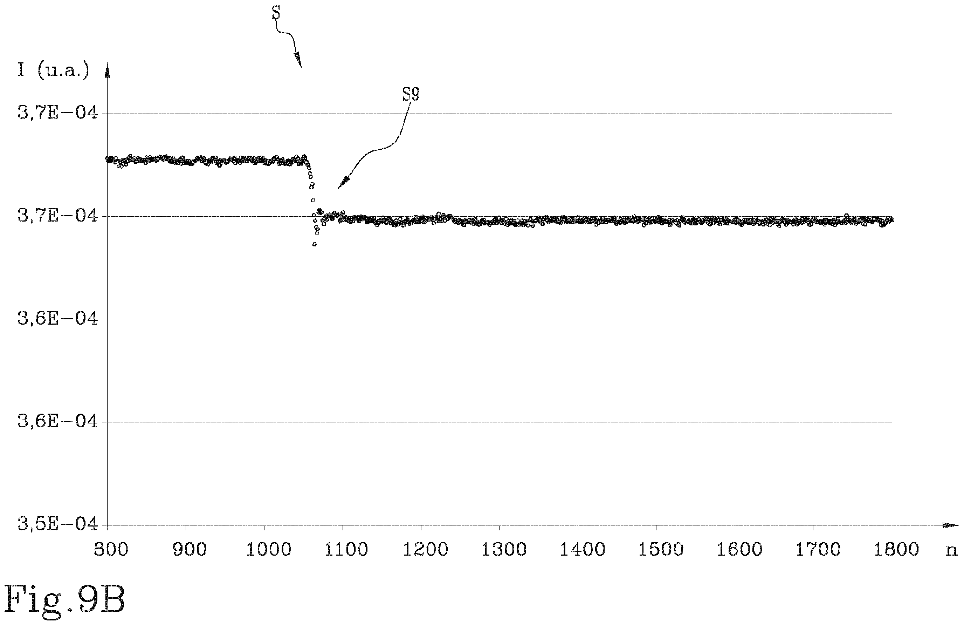

Figures 9A and 9B show the step waveform of the operating signal S sent by the load sensor 52A upon detecting a deformation of the frame 2 due to the lifting of all the wheels of the robot 1, that is to say, the lifting of the robot 1. Figure 9A shows a lifting of the robot 1 along the vertical direction Y.

In particular, the region S9 corresponds to the variation of the intensity of the operating signal S sent to the control unit U: after an operating signal S is received with this step shape, the control unit U is configured for determining the abnormal operating condition of lifting one or more wheels (31, 32A, 32B) and for stopping the cutting elements of the robot 1.

It should be noted in Figure 9B that the operating signal S remains constant to the right of the region S9, highlighting that the robot 1 is still raised.

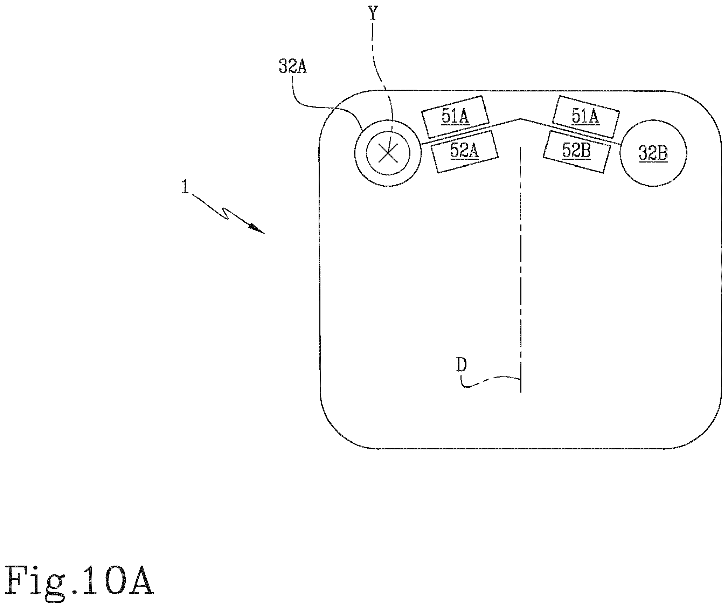

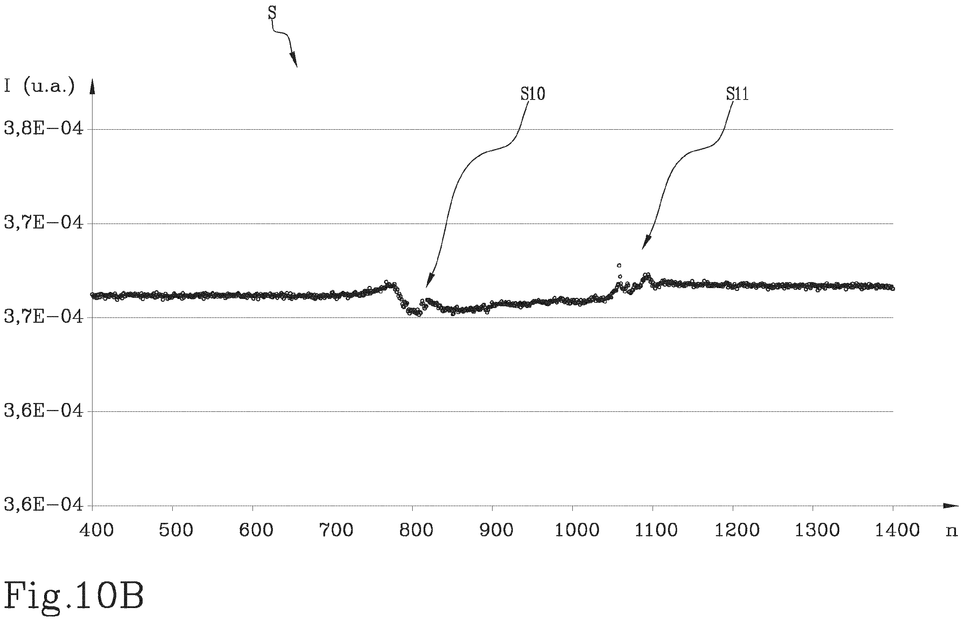

Figures 10A and 10B show the step waveform of the operating signal S sent by the load sensor 52A upon the detection of a deformation of the frame 2 due to the raising of the wheel 32A. Figure 10A shows lifting of the wheel 32A along the vertical direction Y.

In particular, the region S10 corresponds to the variation of the intensity of the operating signal S sent to the control unit U: after an operating signal S is received with this step shape, the control unit U is configured for determining the abnormal operating condition for lifting a wheel and for stopping the cutting elements of the robot 1.

It should be noted in Figure 10B that the operating signal S, around the region S11, returns to the intensity before the step corresponding to the region S10, highlighting that the wheel is no longer raised.

According to an aspect, the robot 1 comprises an inertial measuring unit IMU 9 connected to the control unit U.

The inertial measuring unit IMU 9 is configured for detecting parameters relative to the operating condition of the robot 1 and for sending to the control unit U information relative to said parameters.

The control unit U is configured to control the movement means 3 and/or the cutting means 4 as a function also of said information.

The invention relates to a method for autonomously controlling a lawn mower robot.

According to the invention, the method for autonomously controlling a lawn mower robot, comprises the following steps:
- preparing a robot 1 according to at least one of the aspects described above;
- detecting a deformation of at least a portion of the frame 2 and/or the contact of at least a portion of the frame 2 with an external element 6 by means of the at least one load sensor 5 positioned on the frame 2;
- sending to the control unit U an operating signal S using the at least one load sensor 5;
- determining, by means of the control unit U, an abnormal operating condition of the robot 1, as a result of an operating signal S received from the load sensor 5 representing the deformation of at least one portion of the frame 2 and/or the contact of at least one portion of the frame 2 with an external element 6;
- controlling the movement means 3 and/or the cutting means 4 as a function of said determined abnormal operating condition by means of the control unit U.

The process comprises the control of a robot 1 as described above and according to the appended claims.

## Claims

1. A lawn mower robot comprising:
- a frame (2) comprising an axle (7) and a rigid body (8) supporting the axle (7),
- movement means (3), associated with said frame (2), configured for moving the robot (1) along an advancement direction (D), the movement means (3) comprising a plurality of wheels (31), including at least a first drive wheel (32A) and a second drive wheel (32B), and a traction motor (MA, MB) for each drive wheel (32A, 32B) configured for rotating the respective drive wheel (32A, 32B), the axis (7) being connected to a pair of wheels (31) and/or drive wheels (32A, 32B)
- grass cutting means (4) for performing an operation for cutting grass,
- a control unit (U) configured to control at least the movement means (3) and the cutting means (4),
- at least one load sensor (5) positioned on the frame (2), configured for detecting a deformation of at least a portion of the frame (2) and/or a contact of at least a portion of the frame (2) with an external element (6) and connected to the control unit (U) to send to the control unit (U) an operating signal (S),
the control unit (U) being configured for:
- determining an abnormal operating condition of the robot (1), as a result of an operating signal (S) received from the load sensor (5) representing a deformation of at least one portion of the frame (2) and/or a contact of at least one portion of the frame (2) with an external element (6);
- controlling the movement means (3) and/or the cutting means (4) as a function of said determined abnormal operating condition.
the lawn mower robot (1) being **characterised in that** at least one load sensor (5) is positioned on the axle (7) for detecting a deformation of said axle (7).

2. The lawn mower robot according to the preceding claim, wherein the abnormal operating condition of the robot (1) corresponds to one or more between: impact of the robot (1) with an external element (6), impact of one or more wheels (31, 32A, 32B) with an external element (6), lifting of one or more wheels (31, 32A, 32B), slipping of one or more drive wheels (32A, 32B).

3. The lawn mower robot according to the preceding claim, wherein the control unit (U) is configured to determine an abnormal operating condition of lifting one or more wheels (31, 32A, 32B) as a result of an operating signal (S) received having a step wave shape.

4. The lawn mower robot according to the preceding claim, wherein the control unit (U) is configured for blocking a movement of the cutting means (4) as a result of the determined abnormal operating condition corresponding to the lifting of one or more wheels (31, 32A, 32B).

5. The lawn mower robot according to any one of claims 2 to 4, wherein the control unit (U) is configured to determine an abnormal operating condition of impact of the robot (1) and/or of one or more wheels (31, 32A, 32B) with an external element (6) as a result of an operating signal (S) received having a pulse wave shape.

6. The lawn mower robot according to the preceding claim, wherein the control unit (U) is configured for modifying the advancement direction (D) of the robot (1) and/or for controlling the power supply of the drive wheels (32A, 32B) by the respective traction motor (MA, MB) as a result of the determined abnormal operating condition corresponding to the impact of the robot (1) and/or of one or more wheels (31, 32A, 32B) with an external element (6).

7. The lawn mower robot according to any one of claims 2 to 6, wherein the control unit (U) is configured to determine an abnormal operating condition of slipping one or more drive wheels (32A, 32B) as a result of an operating signal (S) received having a wave shape having trains of pulses in sequence.

8. The lawn mower robot according to the preceding claim, wherein the control unit (U) is configured to control and/or deactivate the power supply of the drive wheels (32A, 32B) by the respective traction motor (MA, MB) as a result of the determined abnormal operating condition corresponding to the slipping of one or more drive wheels (32A, 32B).

9. The lawn mower robot according to any one of the preceding claims, wherein at least one load sensor (5) is positioned in a front portion (81) of the rigid body (8).

10. The lawn mower robot according to any one of the preceding claims, comprising at least a pair of load sensors (5) inside the frame (2) and positioned on the axle (7).

11. The lawn mower robot according to the preceding claim, wherein at least one pair of wheels (31) comprises a first wheel (31A) and a second wheel (31B) and wherein the pair of load sensors (5) inside the frame (2) comprises a first load sensor (5A) and a second load sensor (5B), the first load sensor (5A) being located in the proximity of the first wheel (31A) and the second load sensor (5B) being located in the proximity of the second wheel (31B).

12. The lawn mower robot according to claim 10, wherein at least one pair of wheels (31) comprises a first wheel (31A) and a second wheel (31B), the robot (1) comprising a first pair (51) of load sensors (5) inside the frame (2), comprising a first load sensor (5, 51A) and a second load sensor (5, 51B), and a second pair (52) of load sensors (5) inside the frame (2), comprising a first load sensor (5, 52A) and a second load sensor (5, 52B),
the first load sensors (51A, 52A) of the first and second pairs (51, 52) of load sensors (5) inside the frame (2) being positioned in proximity of the first wheel (31A) and the second load sensors (51B, 52B) of the first and second pairs (51, 52) of load sensors (5) inside the frame (2) being positioned in proximity of the second wheel (31B).

13. The lawn mower robot according to any one of the preceding claims, comprising a pair (53) of front load sensors (5) positioned in the front portion (81) of the rigid body (8).

14. The lawn mower robot according to any one of the preceding claims, comprising an inertial measurement unit IMU (9) connected to the control unit (U), the inertial measurement unit IMU (9) being configured for measuring parameters relative to the operating condition of the robot (1) and for sending to the control unit (U) information relative to said parameters; the control unit (U) being configured for controlling the movement means (3) and/or the cutting means (4) as a function of said information.

15. A method for autonomously controlling a lawn mower robot, comprising the following steps:
- preparing a lawn mower robot (1) according to any one of the preceding claims;
- detecting a deformation of at least a portion of the frame (2) and/or the contact of at least a portion of the frame (2) with an external element (6) by means of the at least one load sensor (5) positioned on the frame (2);
- sending to the control unit (U) an operating signal (S) using the at least one load sensor (5);
- determining, by means of the control unit (U), an abnormal operating condition of the robot (1), as a result of an operating signal (S) received from the load sensor (5) representing the deformation of at least one portion of the frame (2) and/or the contact of at least one portion of the frame (2) with an external element (6);
- controlling the movement means (3) and/or the cutting means (4) as a function of said determined abnormal operating condition by means of the control unit (U).
